# EUROPEAN PATENT APPLICATION

(11) **EP 2 375 304 A2**
(43) Date of publication of application: **12.10.2011**
(21) Application number: 11161915.1
(22) Date of filing: 11.04.2011
(51) Int. Cl.: G06F 1/16, G06F 3/033, G06F 3/048

(54) **Motion control of a portable electronic device**

(30) Priority: 09.04.2010 US 757809
(71) Applicant: Research in Motion Limited, Waterloo, Ontario N2L 3W8 (CA)
(72) Inventor: Wilson, Kelce, Irving TX 75039 (US); Ferrazzini, Axel, Mississauga Ontario L4W 5M4 (CA)
(74) Representative: Noble, Nicholas

(57) **Abstract**

Methods and devices for using motion to control a portable electronic device are disclosed. In one embodiment, a method of using movement to control a portable electronic device, the portable electronic device having a housing containing a display and a sensor, the method comprising displaying a virtual viewing window on the display, wherein said virtual viewing window contains a portion of an electronic document rendered for display; detecting lateral movement of the portable electronic device using the sensor; and controlling the movement of said virtual viewing window over said electronic document by moving said virtual viewing window in a direction, distance, or both consistent with the lateral movement of the portable electronic device.

## Description

### CROSS-REFERENCE TO RELATED APPLICATIONS

This application claims the benefit of U.S. Non-Provisional Application No. US 12/757,809 filed April 09, 2010, entitled "MOTION CONTROL OF A PORTABLE ELECTRONIC DEVICE." The foregoing application is incorporated herein by reference in its entirety.

### FIELD

This disclosure relates to portable electronic devices. More specifically, this disclosure is directed at using motion to control a portable electronic device.

### BACKGROUND

A primary benefit of a portable electronic device such as, for example, a BlackBerry (TM) device is its portability. As the portable electronic device is not physically tethered to a specific location, a user can operate the portable electronic device almost anywhere. Such portability has driven manufacturers of portable electronic devices to design smaller form-factor devices that are more easily carried and operated by the user.

However, as portable electronic devices decrease in size, the smaller size may impair certain functionality. Smaller devices have less area for the placement of user controls, such as physical keys, the display, or both. Accordingly, as the size of the device decreases, the user must, for instance, operate smaller controls, view a smaller display, or both. While touch-sensitive displays may be used to help maximize the utility of the available display space on such devices, even larger touch-sensitive displays may provide a limited display area for viewing. Further, users of portable electronic devices have come to expect that these devices should perform in a manner similar to larger and more powerful devices, such as personal computers. Given the desire for a compact form factor for these devices, achieving the same level of usability and functionality presents a challenge to the designers of such devices.

A challenge for users of portable electronic devices is that many operations which are more easily performed using larger displays to view, for instance, a web page or document, can be more difficult to view on a device having a smaller display. When a user attempts to view a document on a portable electronic device, the user typically can operate a physical control key, a touch-sensitive display, a scrolling mechanism, a mouse mechanism or other similar mechanism to view content of comparatively larger dimension than the display. Given the limitations of viewing content on the display of a portable electronic device, the display control mechanisms typically available on a portable electronic device can be limited in capability. For example, a trackball control mechanism on a portable electronic device may require changing the trackball between different modes of operation such as controlling the cursor on the display, selecting the scroll direction, determining the amount of zoom, or other similar mode. While a trackball control mechanism may be capable of performing some or all of these functions, selecting one of such modes of operation may require a user to select from a plurality of modes of operation while viewing an electronic document.

Thus, there is typically a trade-off between designing a portable electronic device that is portable and compact in size, and designing a device that is easy to operate and use. Further, there is a need to maintain the portability and compactness of the portable electronic device while improving operation and use.

### BRIEF DESCRIPTION OF THE DRAWINGS

To facilitate this disclosure being understood and put into practice by persons having ordinary skill in the art, reference is now made to exemplary embodiments as illustrated by reference to the accompanying figures. Like reference numbers refer to identical or functionally similar elements throughout the accompanying figures. The figures along with the detailed description are incorporated and form part of the specification and serve to further illustrate exemplary embodiments and explain various principles and advantages, in accordance with this disclosure, where:

FIG. 1 is a block diagram illustrating one embodiment of a portable electronic device in accordance with various aspects set forth herein.

FIG. 2 illustrates a method of independently, simultaneously, or both controlling the movement of a virtual viewing window and a cursor over an electronic document.

FIG. 3 is a flow chart of one embodiment of a method of controlling a portable electronic device using detected movement in accordance with various aspects set forth herein.

FIG. 4A is a front view of another embodiment of a portable electronic device in accordance with various aspects set forth herein.

FIG. 4B is a rear view of the portable electronic device of FIG. 4A in accordance with various aspects set forth herein.

FIG. 5 is a perspective view of the portable electronic device of FIG. 4 in which such device is positioned over a surface in accordance with various aspects set forth herein.

FIG. 6 is a side view of the portable electronic device of FIG. 4 in which such device is positioned at a distance from a surface in accordance with various aspects set forth herein.

FIG. 7 is a front view of the portable electronic device of FIG. 4 in which an electronic document is displayed on the display of such device in accordance with various aspects set forth herein.

FIG. 8 is a side view of the portable electronic device of FIG. 4 in which such device has been placed directly on or near a surface in accordance with various aspects set forth herein.

FIG. 9 is a front view of the portable electronic device of FIG. 4 in which the device is moved relative to a surface to zoom, magnify, or both a virtual viewing window in accordance with various aspects set forth herein.

FIG. 10 is a top view of another embodiment of a portable electronic device in which the device is moved generally parallel to a surface to scroll, pan, or both a virtual viewing window over an electronic document in accordance with various aspects set forth herein.

Skilled artisans will appreciate that elements in the accompanying figures are illustrated for clarity, simplicity and to further help improve understanding of the embodiments, and have not necessarily been drawn to scale.

### DETAILED DESCRIPTION

Although the following discloses exemplary methods and devices for use in portable electronic devices, it will be understood by one of ordinary skill in the art that the teachings of this disclosure are in no way limited to the examplaries shown. On the contrary, it is contemplated that the teachings of this disclosure may be implemented in alternative configurations and environments. For example, although the exemplary methods and devices described herein are described in conjunction with a configuration for aforementioned portable electronic devices, the skilled artisan will readily recognize that the exemplary methods and devices may be used in other methods and devices and may be configured to correspond to such other methods and devices as needed. Accordingly, while the following describes exemplary methods and devices of use thereof, persons of ordinary skill in the art will appreciate that the disclosed examplaries are not the only way to implement such methods and devices, and the drawings and descriptions should be regarded as illustrative in nature and not restrictive.

Various techniques described herein can be used for various portable electronic devices. The various aspects described herein are presented as methods and devices that can include a number of components, elements, members, modules, nodes, peripherals, or the like. Further, these methods and devices can include or not include additional components, elements, members, modules, nodes, peripherals, or the like. In addition, various aspects described herein can be implemented in hardware, firmware, software, or any combination thereof. Relational terms described herein such as "above" and "below", "left" and "right", "first" and "second", and the like may be used solely to distinguish one entity or action from another entity or action without necessarily requiring or implying any actual such relationship or order between such entities or actions. The term "or" is intended to mean an inclusive "or" rather than an exclusive "or." Further, the terms "a" and "an" are intended to mean one or more unless specified otherwise or clear from the context to be directed to a singular form.

This disclosure provides methods and devices for using and controlling an electronic device, which in the embodiments described herein is a portable electronic device. By configuring the portable electronic device in accordance with various aspects described herein, increased ease-of-use and control of a portable electronic device is provided. A portable electronic device may also be referred to as a mobile station (MS), terminal, cellular phone, cellular handset, personal digital assistant (PDA), smartphone, wireless organizer, handheld computer, desktop computer, laptop computer, tablet computer, set-top box, television, appliance, medical device, display device, or some other equivalent terminology. Further, the portable electronic device is not required to contain wireless communication capabilities such as a handheld electronic game device, digital photograph album, digital camera, or other similar device.

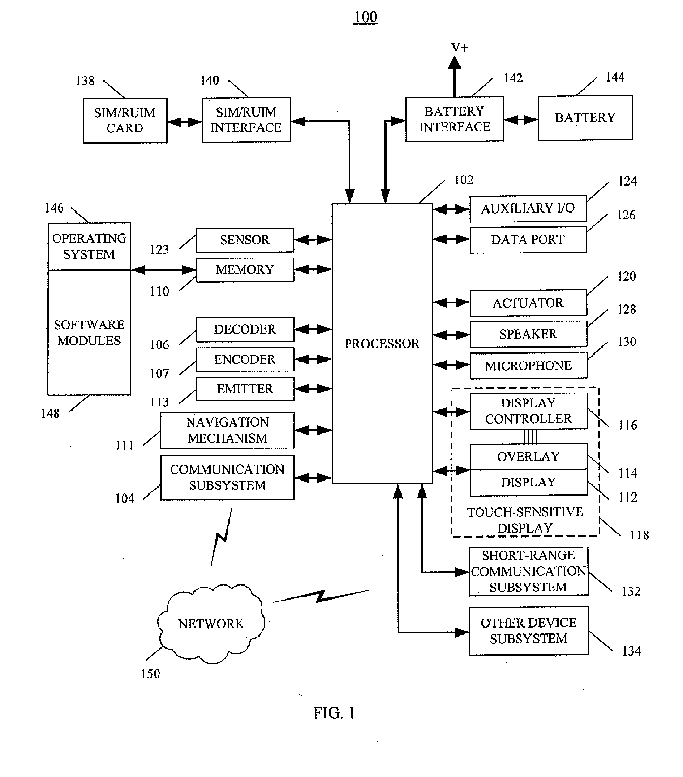

FIG. 1 is a block diagram illustrating one embodiment of a portable electronic device 100 in accordance with various aspects set forth herein In FIG. 1, portable electronic device 100 may include a processor 102 coupled to, for instance, a communication subsystem 104, a decoder 106, an encoder 107, a memory 110, a navigation mechanism 111, a display 112, an emitter 113, a display overlay 114, a display controller 116, a touch-sensitive display 118, an actuator 120, a sensor 123, an auxiliary input/output subsystem 124, a data port 126, a speaker 128, a microphone 130, a short-range communication subsystem 132, another device subsystem 134, a subscriber identity module or a removable user identity module (SIM/RUIM) interface 140, a battery interface 142, other component, or any combination thereof. Navigation mechanism 111 can be, for instance, a trackball, directional pad, trackpad, touch-sensitive display, scroll wheel or other similar navigation mechanism. In designing portable electronic device 100, space considerations may necessitate applying a creative design of the use, placement, integration, or any combination thereof of navigation mechanism 111. For example, navigation mechanism 111 can be a trackball coupled to an actuation button such that the depression of the trackball constitutes actuation of such button.

In FIG. 1, processor 102 can control and perform various functions associated with the control, operation, or both of portable electronic device 100. Portable electronic device 100 can be powered by, for instance, battery 144, an alternating current (AC) source, other power source or combination of power sources. In FIG 1, portable electronic device 100 can use, for instance, battery interface 142 to receive power from battery 144. Battery 144 can be, for instance, a rechargeable battery, replaceable battery, or both. Processor 102 can control battery 144 via battery interface 142.

In this embodiment, portable electronic device 100 can perform communication functions, including data communication, voice communication, video communication, other communication, or any combination thereof using, for instance, processor 102 coupled to auxiliary input/output subsystem 124, data port 126, communication subsystem 104, short-range communication subsystem 132, other device subsystem 134, or any combination thereof. An electronic document such as an e-mail message, short message service (SMS) message, multimedia messaging service (MMS) message, web page, electronic newspaper, electronic book, graphical user interface (GUI), map, image, video, word processing document, spreadsheet document, database document, portable document format (PDF) document, other document, or any combination thereof can be stored in memory 110. Further, the electronic document can be composed, opened, processed, edited, saved, or other similar operation by using, for instance, processor 102 coupled to decoder 106, encoder 107, memory 110, or any combination thereof.

In FIG. 1, portable electronic device 100 can communicate between, for instance, network 150. Network 150 may be comprised of, for instance, a plurality of portable electronic devices 100 and an infrastructure. The infrastructure can include base stations. A base station may also be called a node-B (NodeB), E-UTRAN NodeB (eNB), evolved eNB, base transceiver station (BTS), access point (AP), router, hub, cell, satellite or some other equivalent terminology.

In FIG. 1, display controller 116 can be coupled to display overlay 114, display 112, or both. For example, display overlay 114 and display 112 can be coupled to display controller 116 to form, for instance, touch-sensitive display 118. Touch-sensitive display 118 can also be referred to as a touch-screen display, touch-screen monitor, touch-screen terminal or other similar term. Processor 102 can directly control display overlay 114, indirectly control display overlay 114 using display controller 116, or both. Processor 102 can display, for instance, an electronic document stored in memory 110 on display 112, touch-sensitive display 118, or both of portable electronic device 100.

In this embodiment, portable electronic device 100 may include sensor 123, which can be coupled to processor 102. Sensor 123 can be, for instance, an accelerometer sensor, tilt sensor, force sensor, optical sensor, or any combination thereof. Further sensor 123 may comprise multiple sensors which are the same or different. For example, sensor 123 can include an accelerometer sensor and an optical sensor. An accelerometer sensor may be used, for instance, to detect the direction of gravitational forces, gravity-induced reaction forces, or both. The accelerometer sensor may include, for instance, a cantilever beam with a proof mass and suitable deflection sensing circuitry. The optical sensor can be the same or similar to the sensor used in, for instance, a desktop mouse. Alternatively, the optical sensor can be, for instance, a camera lens. Processor 102 may be configured to process contiguous images captured by the camera lens and use such images to detect the direction, distance, or both of lateral movement by portable electronic device 100.

In FIG. 1, portable electronic device 100 may include subscriber identity module or a removable user identity module (SIM/RUIM) card 138. SIM/RUIM card 138 can contain, for instance, user identification information, which can be used to allow access to network 150 for the user of portable electronic device 100. SIM/RUIM card 138 can be coupled to SIM/RUIM interface 140, wherein processor 102 can control SIM/RUIM card 138 via SIM/RUIM interface 140. User identification information may also be stored in memory 110 and accessed by processor 102.

In this embodiment, portable electronic device 100 can include operating system 146 and software modules 148, which may be stored in a computer-readable medium such as memory 110. Memory 110 can be, for instance, RAM, static RAM (SRAM), dynamic RAM (DRAM), read only memory (ROM), volatile memory, non-volatile memory, cache memory, hard drive memory, virtual memory, other memory, or any combination thereof. Processor 102 can execute program instructions stored in memory 110 associated with operating system 146, software modules 148, other program instructions or combination of program instructions. Further, processor 102 can read, write, or both an electronic document stored in memory 110. Processor 102 may load operating system 146, software modules 148, data, an electronic document, or any combination thereof into memory 110 via communication subsystem 104, auxiliary I/O subsystem 124, data port 126, short-range communications subsystem 132, other device subsystem 134, or any combination thereof.

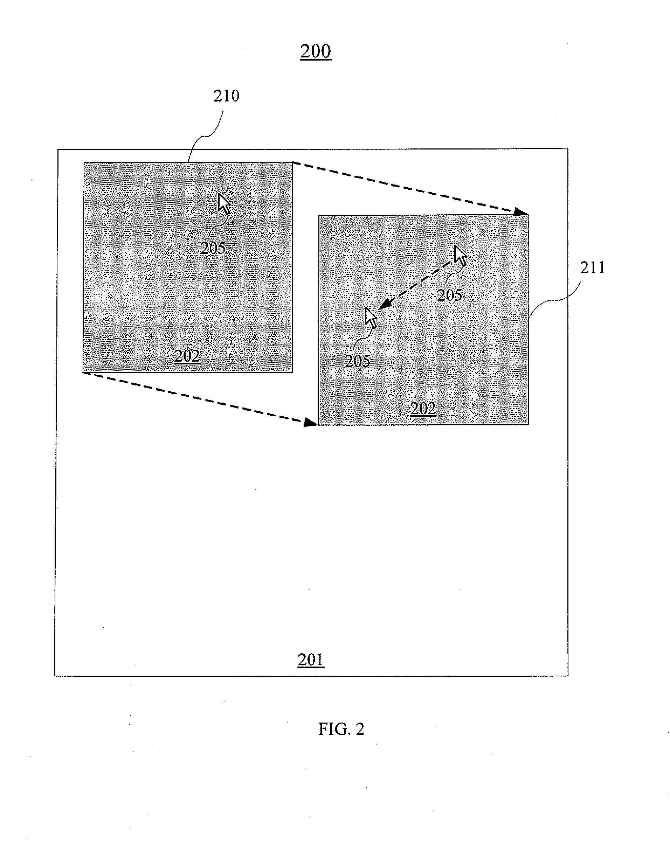

FIG. 2 illustrates method 200 of independently, simultaneously, or both controlling the movement of virtual viewing window 202 and cursor 205 over electronic document 201. In FIG. 2, method 200 can allow virtual viewing window 202 to display a portion of electronic document 201. Virtual viewing window 202 can be the portion of electronic document 201 that is selected for display on display 112. Movement of portable electronic device 100 can be used to, for instance, move virtual viewing window 202 over electronic document 201 in a direction, distance, or both consistent with the movement of portable electronic device 100. Such operation can allow, for instance, the scrolling, panning, or both of virtual viewing window 201 over electronic document 201. For example, movement of portable electronic device 100 is used to move virtual viewing window 202 from a first position 210 to a second position 211.

It is important to recognize that a user of portable electronic device 100 can independently, simultaneously, or both move the virtual viewing window 202 using the movement of portable electronic device 100 while moving cursor 205 using, for instance, navigation mechanism 111, touch-sensitive display 118 or other similar mechanism. Further, the user of portable electronic device 100 can perform a user selection operation by, for instance, pressing down on touch-sensitive display 118, while independently, simultaneously, or both moving the virtual viewing window 202 by using the movement of portable electronic device 100, moving cursor 205 by using navigation mechanism 111, or both. For example, a user can control the movement of cursor 205 by operating navigation mechanism 111 such as a trackball on portable electronic device 101 to navigate and select an object such as a hyperlink, GUI object, phone number or other similar object, while independently, simultaneously, or both controlling the movement of virtual viewing window 202 over electronic document 201 by correspondingly moving portable electronic device 100, In FIG. 2, virtual viewing window 202 is pictured twice but should be recognized as one and the same virtual viewing window 202. Similarly, cursor 205 is pictured multiple times but should be recognized as one and the same cursor 205.

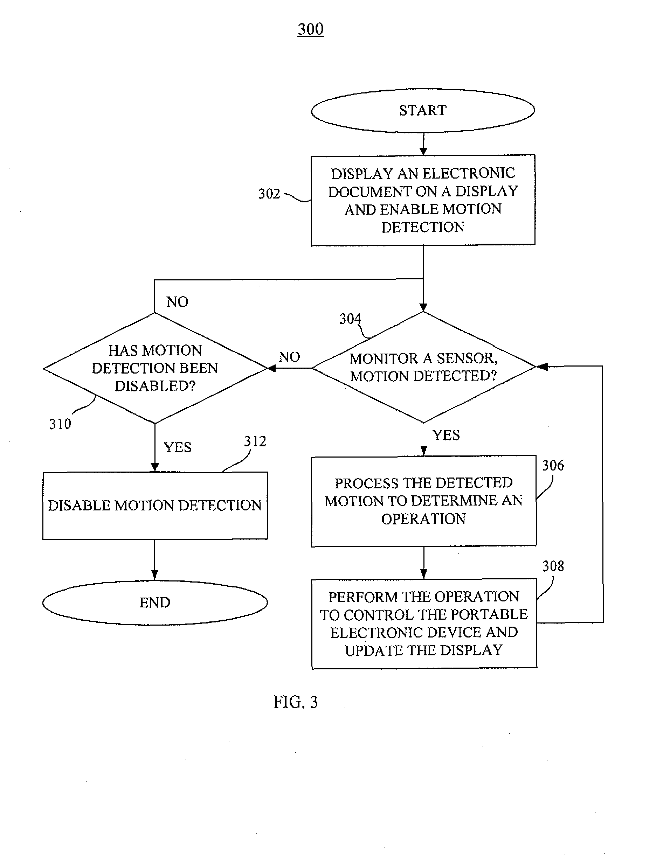

FIG. 3 is a flow chart of one embodiment of method 300 of controlling portable electronic device 100 using detected movement in accordance with various aspects set forth herein. In FIG. 3; method 300 can begin at block 302, where portable electronic device 100 can display electronic document 201 on display 112 and, if required, enable motion detection for portable electronic device 100. Portable electronic device 100 can enable motion detection by, for instance, processor 102 executing one or more software modules 148; selecting a user interface control mechanism associated with, for instance, navigation mechanism 111, auxiliary input/output subsystem 124, touch-sensitive display 118 or other similar input mechanism; using voice recognition via microphone 130; other control; or combination of controls. Further, portable electronic device 100 may be configured such that motion detection is always enabled.

In FIG. 3 at block 310, method 300 can determine whether motion detection has been disabled. Motion detection can be disabled by, for instance, powering off portable electronic device 100, exiting an application, timing out after a period of inactivity, entering standby mode, performing a user interface control operation such as pressing a key, other operation or combination of operations. If motion detection is disabled, at block 312, method 300 can disable, for instance, the use of sensor 123 for motion detection. If motion detection is enabled, at block 304, method 300 can monitor sensor 123 to detect motion. If motion is detected, at block 306, method 300 can process the detected motion to determine an operation to perform. Such operation may include, for instance, moving virtual viewing window 202 over electronic document 201 in a direction, distance, or both consistent with the detected movement of portable electronic device 100; updating display 112; generating an output from portable electronic device 100; modifying a control of portable electronic device 100; changing the configuration of portable electronic device 100; other operation; or combination of operations. For example, based on the detected motion, method 300 can determine to scroll, pan, or both virtual viewing window 201 over electronic document 201; provide a signal to speaker 128; output an electronic document to network 150; perform a keyboard function using keyboard 212; move a cursor on display 112 or other similar operation.

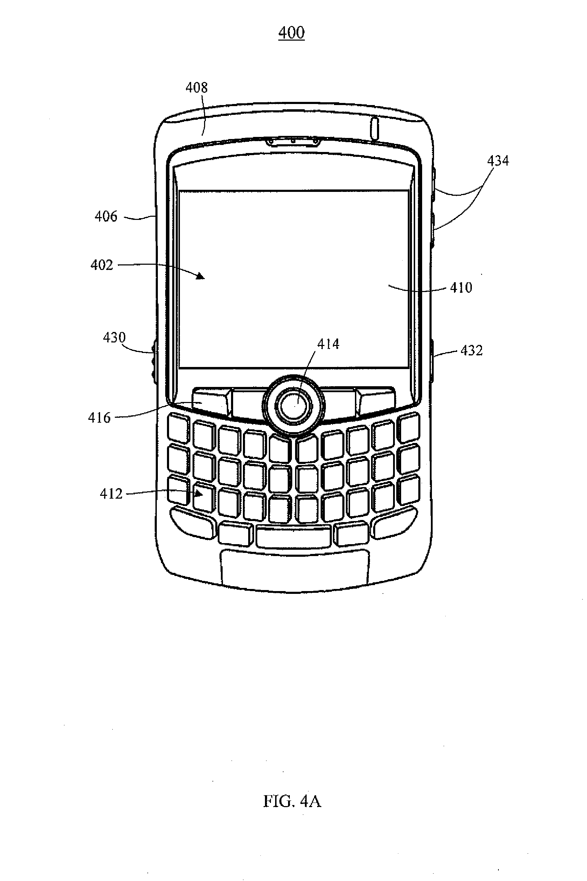

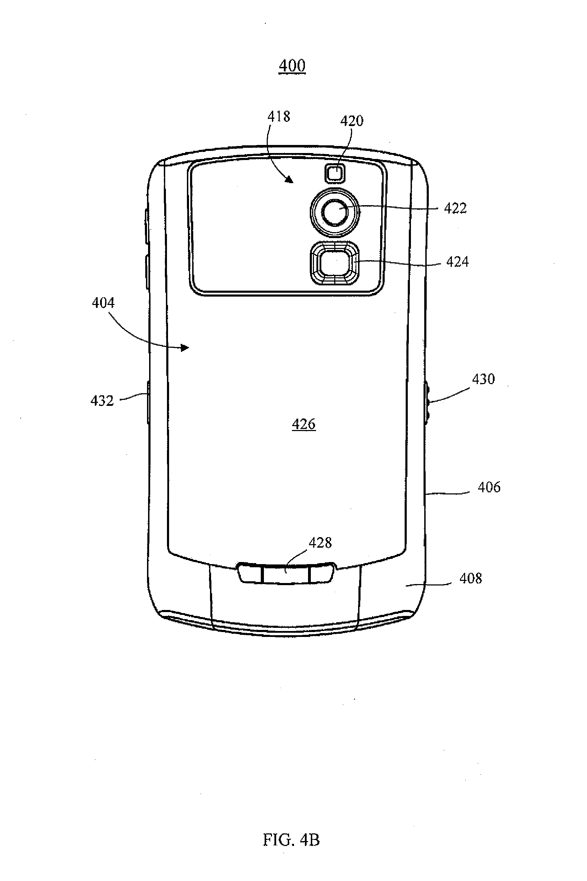

FIG. 4A is a front view and FIG. 4B is a back view of another embodiment of portable electronic device 400 in accordance with various aspects set forth herein. In FIG. 4A, portable electronic device 400 has front side 402 and side walls 406. The graphical illustration of FIG. 4A in its entirety is referred to by 400a. In FIG. 4B, portable electronic device 400 has back side 404 and side walls 406. The graphical illustration of FIG. 4B in its entirety is referred to by 400b. Side walls 406 extend around the periphery of portable electronic device 400, which connects top side 402 and bottom side 404. Top side 402 and bottom side 404 can be located on opposing and generally opposite sides of portable electronic device 400.

In FIGs. 4A and 4B, housing 408 can support various components of portable electronic device 400 and can provide access to many of the user interface control mechanisms of portable electronic device 400. Top side 402 is the side of portable electronic device 400 which a user typically views during operation of portable electronic device 400. Top side 402 can contain display 410 located, for instance, towards the upper end of portable electronic device 400, and a set of user interface control mechanisms located, for instance, towards the lower end of portable electronic device 400. In this embodiment, the set of user interface control mechanisms can include, for instance, keyboard 412, trackball 414, multiple-function keys 416, convenience keys 430 and 432, volume keys 434, or any combination thereof. In FIG. 4A, trackball 414 is centrally located between display 410 and keyboard 412. Further, multiple-function keys 416 are positioned laterally on both sides of trackball 414. In FIG. 4B, bottom side 404 includes camera 418 having flash 420, camera lens 422 and reflective surface 424. Reflective surface 424 can be positioned adjacent to camera lens 422, which may help to, for instance, aim camera 418. Battery cover 426 with latch 428 can also be positioned on bottom side 404 to provide access to some or all internal components such as SIM/RUIM card 138 and battery 144. On side walls 406 of portable electronic device 400, left convenience key 430 and right convenience key 432 can be used to perform certain functions. Further, volume keys 434 can be used to increase or decrease the audio level of, for instance, speaker 128.

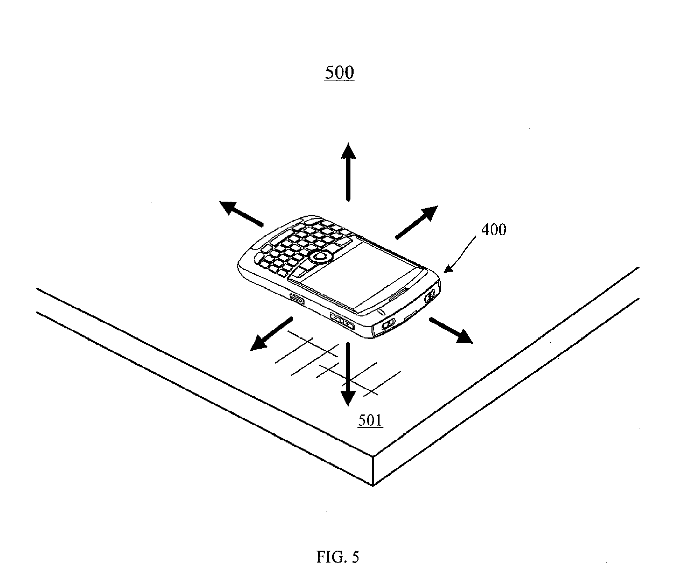

FIG. 5 is a perspective view of portable electronic device 400, which is positioned over surface 501 in accordance with various aspects set forth herein. The graphical illustration of FIG. 5 in its entirety is referred to by 500. In FIG. 5, device 400 may be moved in any direction relative to surface 501 including parallel to surface 501, orthogonal to surface 501, other direction or combination of directions. Further, portable electronic device 400 may be twisted, tilted, rotated, or any combination thereof relative to surface 501.

In FIG. 5, display 410 on front side 402 of portable electronic device 400 generally remains viewable to a user while back side 404, which includes camera lens 422 generally faces towards surface 501. By having camera lens 422 and display 410 on generally opposing sides allows camera lens 422 to detect movement of portable electronic device 400 relative to surface 501 while a user can view the results of the operation induced by the movement on display 410.

In another embodiment, when motion detection is enabled, camera lens 422 can continuously, contiguously, periodically, aperiodically, or any combination thereof provide captured images to processor 102. When portable electronic device 400 is moved relative to surface 501, processor 102 can process the images sent by camera lens 422 to detect movement including the direction, distance, or both to determine the operation to perform on portable electronic device 400.

In another embodiment, depending on the particular manner in which portable electronic device 400 is configured, the detected movement may be further processed to determine whether the detected movement corresponds to a particular action or command for software modules 148, operating system 146, or both.

In another embodiment, camera 418 or any part or parts of camera 418 such as camera lens 422 can serve as sensor 123. When sensor 123 is enabled, camera 418 can provide contiguous images via camera lens 422. These contiguous images can be analyzed by, for instance, processor 102 to detect the movement of portable electronic device 400. Processor 102 can analyze the contiguous images using various techniques such as edge detection, pattern comparison, light-contrast comparison, other technique, or combination of techniques. A person of ordinary skill in the art will recognize the various image processing techniques used to detect movement including the direction and distance of the movement. In addition, flash 420 such as a xenon flash device, high-current flash light emitting diode (LED), through the lens (TTL) flash device, other device, or combination of devices may be used to produce an artificial burst of light, which can be used to improve the detection of movement.

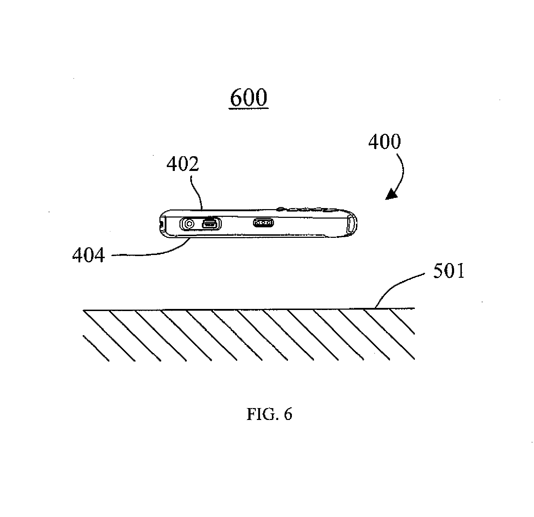

FIGs. 6 through 10 illustrate other embodiments of motion control of portable electronic device 100 and 400. These embodiments are only illustrative and the particular types of movement and any corresponding controls and operations provided in response to such movements may vary based on the application and the particular configuration of portable electronic device 100 and 400.

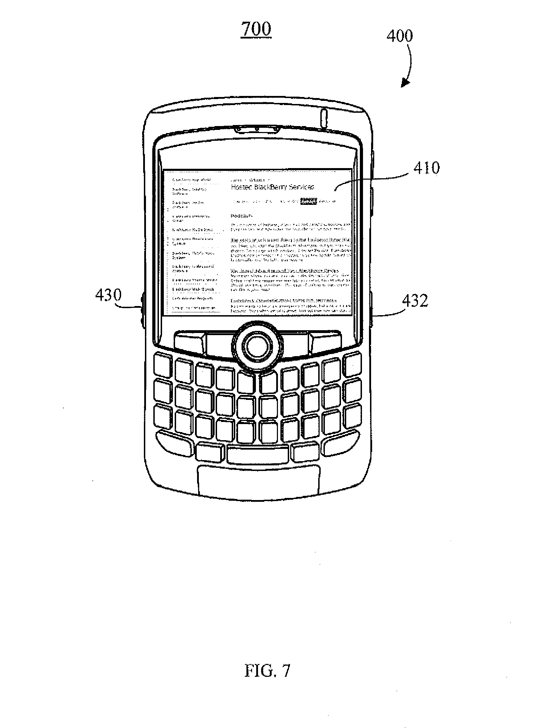

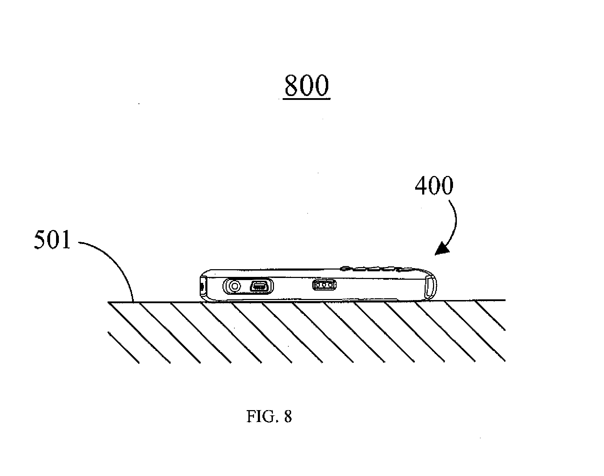

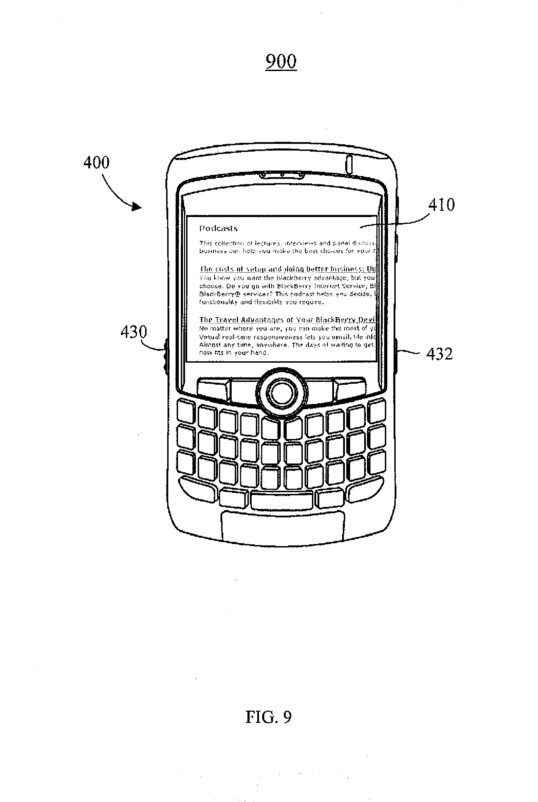

Referring to FIGs. 6 though 9, one embodiment of performing a zooming operation, magnification operation, or both is illustrated in which portable electronic device 400 is moved in a direction generally orthogonal to surface 501 in accordance with various aspects set forth herein. FIG. 6 is a side view of portable electronic device 400 in which portable electronic device 400 is positioned at a distance from surface 501 in accordance with various aspects set forth herein. The graphical illustration of FIG. 6 in its entirety is referred to by 600. Similarly, FIG. 7 is a front view of portable electronic device 400 in which a web page is displayed on display 410 of portable electronic device 400 in accordance with various aspects set forth herein. The graphical illustration of FIG. 7 in its entirety is referred to by 700. It is important to recognize that FIGs. 6 and 7 illustrate portable electronic device 400 at the same detectable distance away from surface 501. FIG. 8 is a side view of portable electronic device 400 in which portable electronic device 400 has been moved from a first position corresponding to the position of FIG. 6 to a second position corresponding to directly on or near surface 501 in accordance with various aspects set forth herein. The graphical illustration of FIG. 8 in its entirety is referred to by 800. FIG. 9 is a front view of portable electronic device 400, in which portable electronic device 200 has been moved closer to surface 501 to zoom, magnify, or both the web page displayed on display 410 of portable electronic device 400 in accordance with various aspects set forth herein.

In FIG. 7, display 410 displays virtual viewing window 202 of a portion of electronic document 201 such as a web page. In FIG. 8, portable electronic device 400 is moved closer to surface 501 than as illustrated in FIG. 6. Processor 102 can analyze the signals received from sensor 123 and can determine that the distance from surface 501 has decreased over a time period. In response to this decrease in distance over a time period, processor 102 can zoom in, increase magnification, or both by proportionately decreasing the size of virtual viewing window 202. Accordingly, as illustrated in FIG. 9, the portion of electronic document 201 as represented by virtual viewing window 202 displayed on display 210 has been zoomed in.

Similarly, processor 102 can analyze signals received from sensor 123 and can determine that the distance from surface 501 has increased over a time period. In response to this increase in distance over a time period, processor 102 can zoom out, decrease magnification, or both by proportionately decreasing the size of virtual viewing window 202. Accordingly, the portion of electronic document 201 as represented by virtual viewing window 202 displayed on display 210 has been zoomed out.

In another embodiment, portable electronic device 400 may detect various distances relative to surface 501 to zoom in or out proportional to the distance to surface 501. Moreover, zooming in or out may occur continuously, contiguously, or both as portable electronic device 400 is moved relative to surface 501.

In another embodiment, the distance virtual viewing window 202 is moved over electronic document 201 in response to lateral movement is proportional to the amount of zoom, independent of the distance portable electronic device 400 is from surface 501, or both. Such embodiment can provide a user of portable electronic device 400 with a consistent, intuitive navigation of electronic document 201.

In another embodiment, the distance virtual viewing window 202 is moved over electronic document 201 in response to lateral movement is proportional to the size of virtual viewing window 202. Such embodiment can also provide a user of portable electronic device 400 with a consistent, intuitive navigation of electronic document 201.

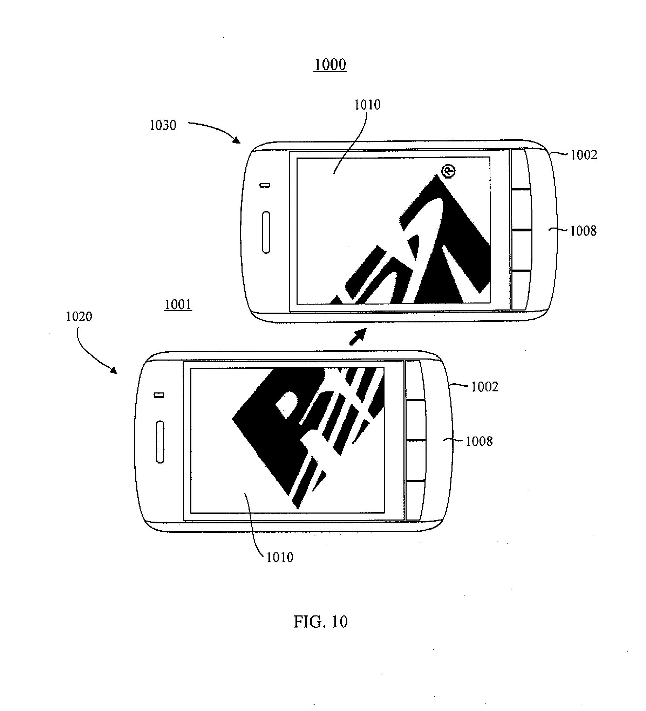

FIG. 10 is a top view of another embodiment of portable electronic device 1002, in which portable electronic device 1002 is moved generally parallel to a surface to scroll, pan, or both virtual viewing window 210 over electronic document 201 in which virtual viewing window 210 is displayed on display 1010 in accordance with various aspects set forth herein. Portable electronic device 1002 can incorporate touch-sensitive display 1010. Electronic document 201 stored in memory 110 contains a copy of the Research In Motion Ltd. registered trademark. In FIG. 10, display 1010 displays virtual viewing window 210, which contains a portion of the Research In Motion Ltd. registered trademark while at a first position 1020. As portable electronic device 1002 is moved generally parallel to surface 1001 from first position 1020 to second position 1030, display 1010 pans, scrolls, or both virtual viewing window 202 over electronic document 201. In FIG. 10, display 1010 displays virtual viewing window 202, which contains another portion of the Research In Motion Ltd. registered trademark while at second position 1030. Portable electronic device 1002 is pictured twice but should be recognized as one and the same portable electronic device 1002. Such lateral movement of portable electronic device 1002 and the corresponding changed position of virtual viewing window 202 over electronic document 201 can be analogous to, for instance, shining a directional flashlight around a darkened room to reveal only the portion of the room illuminated by the beam of light.

In another embodiment, panning, scrolling, or both can be coupled with zooming, magnifying, or both to provide further control over displaying virtual viewing window 202 on display 112, 410 and 1010. For example, portable electronic device 100, 400 and 1002 can move away from surface 501 and 100 to zoom out by, for instance, increasing the size of virtual viewing window 202; move generally parallel to surface 501 and 1001 to pan virtual viewing window 202 over electronic document 201; move toward surface 501 and 1001 to zoom in by, for instance, reducing the size of virtual viewing window 202; or any combination thereof. Further, the rate of panning, scrolling, or both may be comparatively faster at greater distances from surface 501 and 1001, so that virtual viewing window 202 can more quickly navigate over electronic document 201. Moreover, a user interface control mechanism such as keyboard 212, trackball, 214, touch-sensitive display 118 and 1010, multiple-function keys 216, convenience keys 230 and 232, volume keys 234, navigation mechanism 111, or any combination thereof may be used to enable, disable, or both motion control mode to further enhance the user experience.

It should be recognized that the use of motion detection does not preclude the use of navigation mechanism 111 of portable electronic device 100, 400 and 1002. In one embodiment, navigation mechanism 111 of portable electronic device 100, 400 and 1002 may be independently operable, simultaneously operable, or both while portable electronic device 100, 400 and 1002 is in motion detection mode. For example, navigation mechanism 111 such as a trackball may be used to direct a cursor around display 112,410 and 1010 while portable electronic device 100, 400 and 1002 is in motion detection mode. Further, such cursor could be used to, for instance, select objects such as hyperlinks, GUI objects, other objects or combination of objects on display 112, 410 and 1010 while portable electronic device 100, 400 and 1002 is in motion detection mode.

In another embodiment, motion detection signals can be sent from portable electronic device 100, 400 and 1002 to another device such as a workstation, personal computer, public kiosk, other device or combination of devices. Such device may communicate with portable electronic device 100, 400 and 1002 using a wired connection, wireless connection, or both. Further, portable electronic device 100, 400 and 1002 can be configured to send detected motion signals, control signals corresponding to the detected motion, other signals or combination of signals to the other device.

In another embodiment, housing 408 and 1008 of portable electronic device 400 and 1002 may include navigation mechanism 111, for instance, a trackball, scroll wheel, mouse, convenience key, touch-sensitive display, other mechanism, or combination of mechanisms. Further, navigation mechanism 111 may be used to control, operate, or both portable electronic device 100, 400 and 1002.

In another embodiment, portable electronic device 100, 400 and 1002 may use sensor 123 to, for instance, enable, disable, or both some level of control, operation, or both of portable electronic device 400 and 1002 in response to detected movement. For example, processor 102 can be configured to receive a signal from sensor 123, process the signal to determine movement of portable electronic device 400 and 1002, and place portable electronic device 400 and 1002 into standby mode, hibernation mode, low power mode, off mode, on mode, other mode or combination of modes in response to the detected movement. Further, sensor 123 can be placed on a side generally opposing display 112 and 410, touch-sensitive display 118 and 1010, or both so as not to, for example, consume valuable space on the front side of portable electronic device 100, 400 and 1002, which is typically associated with user interface controls such as keypad 412, display 112 and 410, touch-sensitive display 118 and 1010, indicators, soft keys 416, 430 and 432, navigation mechanism 111, or any combination thereof.

In another embodiment, an input component of portable electronic device 100 may be reused as sensor 123. For example, camera 418 or any part or parts of camera 418 such as camera lens 422 may also be used as sensor 123. Further, since camera 418 is common to many portable electronic devices 100, 400 and 1002, camera 418 or any part or parts of camera 418 such as camera lens 422 can also be used as sensor 123 after, for instance, updating any associated software modules 148.

In another embodiment, portable electronic device 100, 400 and 1002 can include a housing 408 and 1008 containing display 112 and 410, touch-sensitive display 118 and 1010, sensor 123, or any combination thereof. Display 112 and 410, touch-sensitive display 118 and 1010, or both can be used for displaying virtual viewing window 202 which contains a portion of electronic document 201. Display 112 and 410, touch-sensitive display 118 and 1010, or both can be located on any side of portable electronic device 100, 400 and 1002. Further, portable electronic device 100, 400 and 1002 can contain one or more displays 112 and 410, one or more touch-sensitive displays 118 and 1010, or both. Movement of portable electronic device 100, 400 and 1002 can be detected using sensor 123 such as camera 418 or any part or parts of camera 418 such as camera lens 422. Further, portable electronic device 100, 400 and 1002 may be controlled by the detected movement of portable electronic device 100, 400 and 1002 by using sensor 123 such as camera 418 or any part or parts of camera 418 such as camera lens 422,

In another embodiment, sensor 123 may detect movement of portable electronic device 100, 400 and 1002 relative to a surface, for instance, a person, table, desk, floor, wall, ceiling, environment, object, other surface or combination of surfaces. Sensor 123 may include detecting movement of portable electronic device 100, 400 and 1002 in a direction generally orthogonal, perpendicular, or both to the surface. In response to such detected movement by sensor 123, processor 102 may perform one or more modes of operation such as scrolling, panning, zooming, magnification, other mode, or combination of modes on virtual viewing window 202. Sensor 123 may include detecting movement of portable electronic device 100, 400 and 1002 in a direction generally parallel to surface 501 and 1001. In response to such detected movement by sensor 123, processor 102 may perform one or more modes of operation such as scrolling, panning, zooming, magnification, other modes of operation or combination of modes of operation on virtual viewing window 202.

In another embodiment, sensor 123 may include detecting movement of portable electronic device 100, 400 and 1002 in a direction generally orthogonal, perpendicular, or both to surface 501 and 1001. In response to such detected movement by sensor 123, processor 102 may perform one or more modes of operation such as zooming, magnification or both virtual viewing window 202. Sensor 123 may include detecting movement of portable electronic device 100, 400 and 1002 in a direction generally parallel to the surface. In response to such detected movement by sensor 123, processor 102 may perform one or more modes of operation such as scrolling, panning, or both virtual viewing window 202 over electronic document 201 displayed.

In another embodiment, sensor 123 may be an optical sensor such as a light-dependent resistor (LDR), photodiode, phototransistor, photocell, charged-coupled device (CCD) sensor, complementary metal oxide silicon (CMOS) sensor, junction field effect transistor (JFET) sensor, other sensors or combination of sensors.

In another embodiment, sensor 123 may be camera 218 or any part or parts of camera 218 such as camera lens 222 integral to portable electronic device 100, 400 and 1002, wherein sensor 123 collects contiguous images that may be analyzed by processor 102 to determine movement of portable electronic device 100, 400 and 1002,

In another embodiment, sensor 123 may detect specific movements of portable electronic device 100, 400 and 1002 and use such detected movements to control various aspects of portable electronic device 100, 400 and 1002. For example, processor 102 may use such detected movements to control some or all of a GUI of portable electronic device 100, 400 and 1002 such as scrolling, panning, zooming, magnifying, other control or combination of controls of virtual viewing window 202 over electronic document 201 displayed on display 112 and 410, touch-sensitive display 118 and 1010, or both of portable electronic device 100, 400 and 1002.

In another embodiment, portable electronic device 100, 400 and 1002 may conserve power by, for instance, automatically exiting motion detection mode when portable electronic device 100, 400 and 1002 has not been moved for some period. Further, processor 102 may periodically, aperiodically, or both enable sensor 123 such as camera 418 or any part or parts of camera 418 such as camera lens 422 for a brief period to detect motion. If motion is detected, then processor 102 can re-enable motion detection mode.

In another embodiment, sensor 123 may be paired with emitter 113 to detect motion of portable electronic device 100, 400 and 1002. For example, emitter 113 such as an LED may emit an electromagnetic signal towards surface 501. Sensor 123 such as a CMOS sensor may detect a reflected electromagnetic signal from surface 501. Processor 102 may continuously analyze reflected electromagnetic signals detected by sensor 123 to detect movement of portable electronic device 100, 400 and 1002 by, for instance, performing a time comparison of the detected patterns.

In another embodiment, a user interface control mechanism such as keyboard 412, trackball 414, touch-sensitive display 118 and 1010, multiple-function keys 416, convenience keys 430 and 432, volume keys 434, navigation mechanism 111, or any combination thereof may be used to allow further control over the magnification, zoom, or both of virtual viewing window 202 over electronic document 201 displayed on display 410. For example, portable electronic device 400 may be configured to enter motion detection mode when, for instance, one or more of convenience keys 430 and 432 is depressed.

In another embodiment, portable electronic device 100, 400 and 1002 can be configured such that the level of magnification, zoom, or both can maintain the same level prior to, for instance, disabling motion detection mode. For example, a user of portable electronic device 100, 400 and 1002 may perform multiple zoom out operations by placing portable electronic device 100, 400 and 1002 on or near surface 501 and 1001; enabling motion detection mode by, for instance, selecting a user interface control mechanism such as keyboard 412, trackball 414, touch-sensitive display 118 and 1010, multiple-function keys 416, convenience keys 430 and 432, volume keys 434, navigation mechanism 111, or any combination thereof; and lifting portable electronic device 100, 400 and 1002 away from surface 501 and 1001 to zoom out. After portable electronic device 100, 400 and 1002 is some distance away from surface 501 and 1001, disabling motion detection mode by, for instance, selecting the user interface control mechanism. The portable electronic device 100, 400 and 1002 can then be placed on or near surface 501 and 1001. The same step can be repeated to further zoom out virtual viewing window 202. Similarly, a user may zoom in by operating the user interface mechanism while portable electronic device 100, 400 and 1002 is moved toward surface 501 and 1001.

In another embodiment, a computer readable medium such as memory 110 may store instructions for execution by processor 102 of portable electronic device 100, 400 and 1002 and may cause portable electronic device 100, 400 and 1002 to implement any of the methods described herein.

In another embodiment, an electronic document is a web page.

In another embodiment, a housing of a portable electronic device such as a tablet computer includes a navigation mechanism, wherein the navigation mechanism is used for controlling a cursor on a virtual viewing window and is operated independently, simultaneously, or both from controlling the movement of the virtual viewing window over an electronic document, and wherein the navigation mechanism is further used to select an object in the virtual viewing window.

In another embodiment, a sensor of a portable electronic device such as a tablet computer is an optical sensor.

In another embodiment, a display is positioned on a first side of a portable electronic device such as a tablet computer, wherein a sensor is positioned on a second side of the portable electronic device and is a camera lens integral to the portable electronic device, wherein the first side and the second side are on opposing sides of the portable electronic device, and wherein detecting lateral movement of the portable electronic device using the sensor includes analyzing contiguous images captured by the camera lens.

In another embodiment, a sensor of a portable electronic device such as a tablet computer is an accelerometer.

In another embodiment, an emitter of a portable electronic device such as a tablet computer is used to emit an electromagnetic signal towards a surface, and a sensor of the portable electronic device is positioned to detect a reflected portion of the electromagnetic signal from the surface.

In another embodiment, an electronic document is a graphical user interface (GUI) and a processor of a portable electronic device such as a tablet computer is further configured to control the GUI.

In another embodiment, a user interface control mechanism of a portable electronic device such as a tablet computer is used to enable, disable, or both control of the portable electronic device in response to lateral movement detected by a sensor of the portable electronic device.

In another embodiment, the distance a virtual viewing window is moved over an electronic document in response to detected lateral movement is proportional to the size of the virtual viewing window.

In another embodiment, a navigation mechanism of a portable electronic device such as a tablet computer is used to control a cursor on said virtual viewing window, wherein the navigation mechanism is operated independently, simultaneously, or both from moving the virtual viewing window in a direction, distance, or both consistent with the lateral movement of the portable electronic device.

In another embodiment, a navigation mechanism of a portable electronic device such as a tablet computer is further used to select an object in a virtual viewing window.

Having shown and described exemplary embodiments, further adaptations of the methods and devices described herein may be accomplished by appropriate modifications by one of ordinary skill in the art without departing from the scope of the present disclosure. Several of such potential modifications have been mentioned, and others will be apparent to those skilled in the art. For instance, the exemplars, embodiments, and the like discussed above are illustrative and are not necessarily required. Accordingly, the scope of the present disclosure should be considered in terms of the following claims and is understood not to be limited to the details of structure, operation and function shown and described in the specification and drawings.

As set forth above, the described disclosure includes the aspects set forth below.

## Claims

1. A method of using movement to control a portable electronic device, the portable electronic device having a housing containing a display and a sensor, the method comprising:
displaying a virtual viewing window (202) on the display (112), wherein said virtual viewing window (202) contains a portion of an electronic document (201) rendered for display;
detecting lateral movement of the portable electronic device (100) using the sensor (123); and
controlling the movement of said virtual viewing window (202) over said electronic document (201) by moving said virtual viewing window (202) in a direction, distance, or both consistent with the lateral movement of the portable electronic device (100).

2. The method of claim 1, wherein said detecting lateral movement of the portable electronic device (100) using the sensor (123) further comprising:
detecting lateral movement relative to a surface (501).

3. The method of claim 1, wherein said detecting lateral movement of the portable electronic device (100) using the sensor (123) further comprising:
detecting lateral movement relative to a surface (501) and in a direction generally parallel to the surface (501); and
wherein said controlling the movement of said virtual viewing window (202) over said electronic document (201) in response to said detected lateral movement further comprising:
scrolling, panning, or both said virtual viewing window (202) over said electronic document (201) to display another portion of said electronic document (201) on the display (112).

4. The method of claim 3, wherein the distance said virtual viewing window (202) is moved over said electronic document (201) in response to said detected lateral movement is proportional to the amount of zoom, independent of the distance the portable electronic device (100) is from said surface (501), or both.

5. The method of claim 1, wherein the sensor (123) is an optical sensor.

6. The method of claim 1, wherein the sensor (123) is an accelerometer.

7. The method of claim 1, wherein said detecting lateral movement of the portable electronic device (100) using the sensor (123) further comprising:
emitting an electromagnetic signal from an emitter (113) of the portable electronic device (100); and
detecting a reflection of said electromagnetic signal from a surface (501) using said sensor (123).

8. The method of claim 1, wherein the display (112) is positioned on a first side of the portable electronic device (100);
wherein the sensor (123) is a camera lens integral to the portable electronic device (100), said camera lens is positioned on a second side of the portable electronic device (100), and said first side and said second side are on opposing sides of the portable electronic device(100); and
wherein said detecting lateral movement of the portable electronic device (100) using the sensor (123) includes analyzing contiguous images captured by said camera lens.

9. The method of claim 1, wherein said electronic document (201) is a graphical user interface (GUI); and
wherein said controlling the movement of said virtual viewing window (202) on the display (112) in response to said detected lateral movement further comprising controlling said GUI.

10. The method of claim 1, further comprising coupling the portable electronic device (100) to a computer, wherein the portable electronic device (100) is used as a peripheral device of said computer, wherein the portable electronic device (100) provides a signal to said computer associated with the detected lateral movement of the portable electronic device (100).

11. The method of claim 1, wherein the housing of the portable electronic device (100) further includes a navigation mechanism (111), wherein the navigation mechanism (111) is used for controlling a cursor (205) on said virtual viewing window (202) and is operated independently, simultaneously, or both from said controlling the movement of said virtual viewing window (202) over said electronic document (201).

12. The method of claim 1, wherein the distance said virtual viewing window (202) is moved over said electronic document (201) in response to said detected lateral movement is proportional to the size of said virtual viewing window (202).

13. The method of claim 1, wherein the housing of the portable electronic device (100) further contains a user interface control mechanism (111), wherein the user interface control mechanism (111) is used to enable, disable, or both said controlling the movement of said virtual viewing window (202) over said electronic document (201).

14. A computer readable medium having stored instructions executed by a processor of the portable electronic device and causing the portable electronic device to implement the method of claim 1.

15. A portable electronic device, comprising:
a memory (110) to contain an electronic document (201);
a display (112) to display a virtual viewing window (202), wherein said virtual viewing window (202) contains a portion of said electronic document (201) rendered for display;
a sensor (123) for detecting lateral movement of the portable electronic device; and
a processor (102) in communication with said memory (110), said display (112), and said sensor (123), wherein said processor (102) is configured to receive a signal from said sensor (123), process said signal to determine lateral movement of the portable electronic device (100), and move said virtual viewing window (202) in a direction, distance, or both consistent with the lateral movement of the portable electronic device (100).
